# FASCICULE DE BREVET EUROPEEN

(11) **EP 3 201 732 B1**
(45) Date de publication et mention de la délivrance du brevet: **04.03.2020**
(21) Numéro de dépôt: 15784581.9
(22) Date de dépôt: 29.09.2015
(51) Int. Cl.: G06F 3/01, F16F 9/53, H01H 3/00, H01H 19/00

(54) **INTERFACE HAPTIQUE OFFRANT UNE MAÎTRISE DU RESSENTI HAPTIQUE AMÉLIORÉE**
HAPTISCHE SCHNITTSTELLE MIT VERBESSERTER STEUERUNG DER HAPTISCHEN EMPFINDUNG
HAPTIC INTERFACE PROVIDING IMPROVED CONTROL OF THE HAPTIC SENSATION

(30) Priorité: 29.09.2014 FR 1459182
(43) Date de publication de la demande: 09.08.2017
(73) Titulaire: Commissariat à l'Énergie Atomique et aux Énergies Alternatives, 75015 Paris (FR)
(72) Inventeur: ECK, Laurent, F-91120 Palaiseau (FR); LOZADA, José, F-91120 Palaiseau (FR)
(74) Mandataire: Brevalex
(86) Numéro de dépôt international: PCT/EP2015/072317
(87) Numéro de publication internationale: WO 2016/050718

(56) Documents cités:
- WO-A2-2013/157205
- FR-A1- 2 930 655
- US-A- 5 555 894
- US-A1- 2005 184 696
- US-A1- 2008 294 984
- US-A1- 2012 267 221

## Description

### DOMAINE TECHNIQUE ET ÉTAT DE LA TECHNIQUE ANTÉRIEURE

La présente invention se rapporte à une interface haptique offrant une maîtrise du ressenti haptique améliorée.

Une interface haptique peut prendre la forme d'un bouton rotatif manipulé par un utilisateur, dans ce cas l'interface oppose un couple résistant à l'utilisateur en fonction de la position angulaire du bouton d'actionnement et du déplacement appliqué par l'utilisateur, permettant ainsi de définir des motifs haptiques qui seront ressentis par l'utilisateur lorsqu'il tourne le bouton.

Le couple résistant peut être transmis au bouton par l'intermédiaire d'un fluide magnéto-rhéologique dont la viscosité apparente est modifiée par l'application d'un champ magnétique afin de définir les motifs haptiques prédéfinis.

Certains motifs haptiques comportent de nombreuses variations du couple résistant dans une zone angulaire relativement étroite. Dans ce cas, on constate une diminution du ressenti haptique perçu par l'utilisateur lorsque la vitesse d'actionnement du bouton augmente.

Le document FR 2 930 655 A1 divulgue une interface haptique selon le préambule des revendications 1 et 2.

### EXPOSÉ DE L'INVENTION

C'est par conséquent un but de la présente invention d'offrir une interface haptique offrant une maîtrise du ressenti haptique améliorée.

Le but précédemment énoncé est atteint par une interface haptique selon la revendication 1 ou la revendication 2.

Grâce à l'invention, en appliquant un motif haptique qui est dépendant de la vitesse d'actionnement de l'élément d'interaction avec l'utilisateur, il est possible de moduler, par exemple d'accentuer le ressenti haptique en fonction de la vitesse d'actionnement de l'élément d'interaction avec l'utilisateur. Cette modulation peut porter sur des modifications d'amplitude ou de forme du motif. Ainsi en tenant compte de la vitesse d'actionnement dans la sélection de la valeur de motif haptique, la maîtrise du ressenti haptique est amélioré. On évite par exemple une diminution du ressenti haptique lorsque la vitesse d'actionnement est élevée.

De manière particulièrement avantageuse, on utilise un motif à vitesse lente et un motif à vitesse rapide et on effectue une interpolation entre une valeur d'un motif à vitesse nulle ou faible et une valeur d'un motif à vitesse rapide pour la position mesurée.

Dans un mode de réalisation, on utilise un motif à vitesse lente et un motif à vitesse rapide et un seuil est fixé en dessous duquel on considère que la vitesse d'actionnement de l'élément d'interaction est lente et au-delà duquel on considère que la vitesse d'actionnement de l'élément d'interaction avec l'utilisateur est élevée, et on applique l'un ou l'autre des motifs suivant que la vitesse d'actionnement est considérée comme élevée ou comme faible.

En d'autres termes, pour chaque position courante on prévoit d'appliquer au moins deux valeurs de stimulus dont les intensités peuvent être différentes ou non afin de tenir compte de la vitesse d'actionnement de l'élément d'interaction avec l'utilisateur, alors que dans les interfaces haptiques de l'état de la technique une seule valeur de stimulus est appliquée pour chaque position courante quelle que soit la vitesse d'actionnement. Avantageusement une valeur de stimulus est déterminée pour chaque valeur de vitesse d'actionnement selon une loi ou un algorithme de calcul prédéterminé prenant la vitesse comme paramètre d'entrée.

Selon une caractéristique additionnelle, il peut être prévu de mettre en œuvre un dispositif de détermination de l'intention d'action de l'utilisateur avant que le mouvement appliqué à l'élément d'interaction avec l'utilisateur ne devienne perceptible pour l'utilisateur et pour le capteur de mesure de position, afin de déterminer le sens de déplacement que l'utilisateur a l'intention d'appliquer à l'élément d'interaction avec l'utilisateur, ce qui permet d'améliorer encore le rendu haptique.

Par exemple, les moyens pour déterminer l'intention d'action de l'utilisateur sur l'élément d'interaction avec l'utilisateur comportent :
- des moyens pour détecter le couple exercé par un utilisateur sur l'élément d'interaction avec l'utilisateur, dans le cas d'un élément d'interaction avec l'utilisateur mobile en rotation, afin de connaître le sens du couple et si le couple est supérieur à une valeur donnée pour un sens donné, l'unité de commande commandant le système de génération dudit stimulus sur la base des informations obtenues sur le couple au moins lorsqu'une vitesse nulle ou faible de l'élément d'interaction avec l'utilisateur est détectée, ou
- des moyens pour détecter l'effort exercé par un utilisateur sur l'élément d'interaction avec l'utilisateur, dans le cas d'un élément d'interaction avec l'utilisateur mobile en translation, afin de connaître le sens de la force et si la force est supérieure à une valeur donnée pour un sens donné, l'unité de commande commandant le système de génération dudit stimulus sur la base des informations obtenues sur la force au moins lorsqu'une vitesse nulle ou faible de l'élément d'interaction avec l'utilisateur est détectée.

Les moyens pour détecter le couple ou la force appliqué par l'utilisateur sur l'élément d'interaction avec l'utilisateur peuvent comporter au moins un capteur d'effort, préférentiellement monté en précontrainte ou au moins un capteur de la déformation provoquée par le couple ou la force à l'un des éléments de l'interface haptique.

L'interface haptique peut comporter un corps d'épreuve qui est disposé de sorte à être déformé par le couple ou la force appliqué par l'utilisateur sur l'élément d'interaction avec l'utilisateur, les moyens pour détecter le couple ou la force étant en contact avec ledit corps d'épreuve. De préférence, le corps d'épreuve est en un matériau tel que sa déformation n'est pas perceptible par l'utilisateur.

Avantageusement, les moyens générant les ordres mettent en œuvre une interpolation, par exemple une interpolation linéaire, entre une valeur de la première base de données et une valeur de la deuxième base de données ou entre une valeur de la troisième base de données et une valeur de la quatrième base de données.

Par exemple, la deuxième vitesse donnée peut être fixée comme étant la vitesse d'actionnement maximale dans le premier sens d'actionnement et la quatrième vitesse donnée est fixée comme étant la vitesse d'actionnement maximale dans le deuxième sens d'actionnement

Dans un mode de réalisation avantageux, le fluide est un fluide magnéto-rhéologique, le stimulus étant un champ magnétique et les ordres générés sont des intensités de courant.

Les moyens pour déterminer la vitesse d'actionnement peuvent par exemple calculer les dérivées des informations fournis par les moyens de détermination de la position courante.

Dans un exemple de réalisation, l'élément d'interaction avec l'utilisateur est mobile en rotation et est solidaire d'un arbre de rotation d'axe longitudinal duquel est solidaire en rotation l'élément d'interaction avec le fluide, les moyens de mesure de la position angulaire étant un capteur de position angulaire.

Dans un autre exemple de réalisation, l'élément d'interaction avec l'utilisateur est mobile en translation.

La présente invention a également pour objet un procédé de commande d'une interface haptique selon l'invention, comportant les étapes:
a) détermination de la position courante de l'élément d'interaction avec l'utilisateur,
b) détermination de la vitesse de l'élément d'interaction avec l'utilisateur,
c) détermination du sens d'actionnement,
d) détermination, pour le sens d'actionnement déterminé, d'une valeur d'un motif haptique pour la vitesse d'actionnement déterminée,
e) génération d'un ordre au système de génération dudit stimulus.

Lors de l'étape d), la valeur d'un motif haptique peut être déterminée à partir d'une première valeur d'un motif haptique pour une vitesse d'actionnement inférieure à une première valeur donnée et non nulle et d'une deuxième valeur d'un motif haptique pour une vitesse d'actionnement au moins égale à une deuxième valeur donnée.

Par exemple, l'étape d) est une étape de calcul de ladite valeur d'un motif haptique pour la vitesse d'actionnement déterminée au moyen d'une fonction seuil, la valeur du motif pour la vitesse d'actionnement déterminée étant soit la première valeur d'un motif haptique pour une vitesse d'actionnement inférieure à une première valeur donnée, soit la deuxième valeur d'un motif haptique pour une vitesse d'actionnement au moins égale à une deuxième valeur donnée.

De manière avantageuse, le procédé peut comporter l'étape préalable à l'étape d) de détermination de l'intention d'action de l'utilisateur sur l'élément d'interaction avec l'utilisateur. Lors de l'étape d), la valeur d'un motif haptique peut être déterminée à partir d'une première valeur d'un motif haptique pour une vitesse d'actionnement inférieure ou égale à une première valeur donnée éventuellement nulle et d'une deuxième valeur d'un motif haptique pour une vitesse d'actionnement au moins égale à une deuxième valeur donnée.

L'étape d) peut être une étape de calcul de ladite valeur d'un motif haptique pour la vitesse d'actionnement déterminée par interpolation, par exemple par interpolation linéaire.

### BRÈVE DESCRIPTION DES DESSINS

La présente invention sera mieux comprise sur la base de la description qui va suivre et des dessins en annexe sur lesquels:
- la figure 1A est une vue en coupe d'un exemple de réalisation d'une interface haptique rotative pouvant être mise en œuvre dans la présente invention,
- la figure 1B est une représentation schématique d'une interface rotative selon l'invention,
- la figure 2 une représentation graphique de la variation de la contrainte de freinage appliquée par un frein magnéto-rhéologique en fonction de la position angulaire d'un élément d'interaction avec l'utilisateur pour un motif dans un sens donné et pour une vitesse donnée,
- la figure 3 est une représentation graphique du niveau de freinage appliqué par le frein magnéto-rhéologique en fonction de la vitesse d'actionnement de l'élément d'interaction avec l'utilisateur,
- les figures 4 et 5 représentent des exemples d'algorithmes de commande de l'interface haptique selon l'invention,
- la figure 6 est une vue en coupe transversale le long du plan A-A de l'interface de la figure 1,
- la figure 7 est une vue en perspective d'un exemple de réalisation d'un corps d'épreuve mis en œuvre dans l'interface de la figure 6,
- la figure 8 est une vue en perspective d'un autre exemple de réalisation d'un corps d'épreuve pouvant être mis en œuvre dans l'interface de la figure 6,
- la figure 9 est une vue de côté d'un autre exemple d'interface haptique,
- les figures 10A à 10C sont différentes vues du corps d'épreuve mis en œuvre dans l'interface de la figure 9,
- la figure 11 est une vue en éclaté d'un exemple d'interface haptique linéaire pouvant être mise en œuvre dans l'invention,
- la figure 12 représente un exemple d'algorithme de commande de l'interface haptique selon l'invention,
- les figures 13 et 14 représentent des variantes de l'algorithme des figures 4 et 5 respectivement, tenant compte de la connaissance de l'intention d'action de l'utilisateur.

### EXPOSÉ DÉTAILLÉ DE MODES DE RÉALISATION PARTICULIERS

Dans la description qui va suivre, l'exemple d'une interface haptique à bouton rotatif va être décrit en détail, mais il sera compris que l'invention s'applique également à une interface haptique à déplacement linéaire de type curseur. En outre, l'interface décrite met en œuvre un fluide magnéto-rhéologique, i.e. dont la viscosité apparente varie en fonction du champ magnétique appliqué, mais la mise en œuvre d'un fluide électro-rhéologique, i.e. un fluide dont la viscosité apparente dépend du champ électrique appliqué, ne sort pas du cadre de la présente invention.

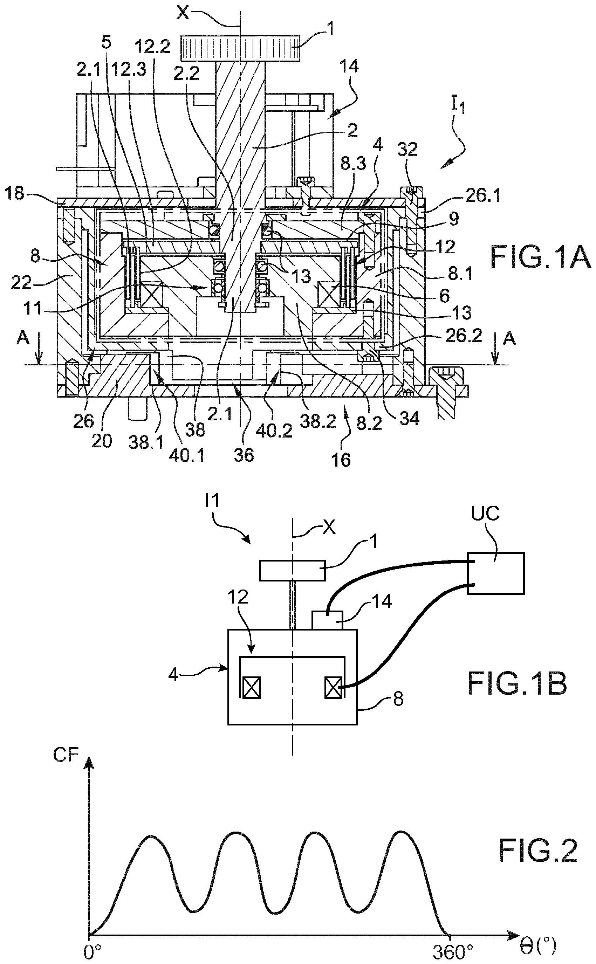

Sur la figure 1A, on peut voir une vue en coupe longitudinale d'un exemple de réalisation d'une interface haptique rotative I1 selon l'invention.

L'interface haptique I1 comporte un élément 1 destiné à être manipulé par un utilisateur et qui sera désigné par la suite « bouton », ce bouton est solidaire en rotation d'un arbre 2 mobile en rotation autour de l'axe X, et un dispositif de génération d'effort résistant 4 ou frein magnéto-rhéologique s'opposant à la rotation de l'arbre 2.

Le frein 4 comporte un fluide dont on peut modifier les caractéristiques au moyen d'un champ magnétique et un système de génération d'un champ magnétique 6 reçus dans un boîtier 8. Le fluide est, par exemple un liquide magnéto-rhéologique. L'ensemble comprenant le boîtier, le fluide et le système de génération d'un champ magnétique forme un frein magnéto-rhéologique.

Le boîtier 8 délimite une chambre étanche 9 contenant le fluide magnéto-rhéologique. Tout ou partie de cette chambre étant soumise à un champ magnétique généré par le système 6. Le boîtier 8 comporte une paroi latérale 8.1, un fond inférieur 8.2 et un fond supérieur 8.3.

L'arbre 2 traverse le fond supérieur 8.3, traverse la chambre 9 et traverse le fond inférieur 8.2. L'extrémité 2.1 de l'arbre 2, opposée à celle portant le bouton 1, est logée dans le fond inférieur du boîtier 8 et est guidée en rotation au moyen d'un roulement 11 monté dans le fond inférieur 8.2. Des joints 13, par exemple des joints toriques, assurent l'étanchéité entre l'arbre et les fond inférieur et supérieur.

Le boîtier 8 délimite une chambre étanche confinant le fluide magnéto-rhéologique.

Le frein 4 comporte également un élément 12 solidaire en rotation de l'arbre 2 et logé dans la chambre étanche 10. Cet élément est apte à interagir avec le fluide magnéto-rhéologique, la rotation de l'élément 12 étant plus au moins freinée par le fluide magnéto-rhéologique en fonction de sa viscosité apparente.

Dans l'exemple représenté, l'élément 12 comporte deux parois latérales concentriques 12.1, 12.2 de section transversale circulaire solidaire d'un fond 12.3, lui-même solidarisé en rotation avec l'arbre.

En variante, l'élément 12 peut ne comporter qu'une paroi latérale ou plus de deux parois latérales concentriques. En variante encore, l'élément 12 pourrait être formé par un disque. Par ailleurs, l'élément d'interaction pourrait comporter des lumières et/ou des portions en saillie ou en creux afin d'augmenter la résistance au déplacement.

Dans l'exemple représenté, le fond inférieur 8.2 du boîtier 8 a une forme telle que le volume intérieur de la chambre étanche 9 a une forme qui correspond à celle de l'élément d'interaction 12, ce qui permet de réduire la quantité de fluide nécessaire. Dans l'exemple représenté, un élément cylindrique 13 à section circulaire solidaire du boîtier est interposé entre les deux parois latérales 12.1, 12.2, celui-ci contribue à l'effet de cisaillement du fluide magnéto-rhéologique lorsque les parois latérales 12.1 et 12.2 sont mises en rotation.

Les parois latérales 12.1, 12.2 de l'élément 12 peuvent être en matériau magnétique ou amagnétique.

Dans l'exemple représenté, le système de génération d'un champ magnétique variable 6 comporte une bobine fixée sur le boîtier et disposée à l'intérieur de l'élément d'interaction 12, et une alimentation en courant (non représentée) commandée par une unité de commande en fonction de la manipulation du bouton et des motifs préenregistrés.

L'interface comporte également un capteur de position 14 qui est, dans l'exemple représenté, situé à l'extérieur du boîtier et en partie solidaire de l'arbre 2. Le capteur de position 14 permet de mesurer la position courante du bouton, qui est dans l'exemple représenté la position angulaire courante. Il peut s'agir par exemple d'un codeur optique incrémental.

L'interface haptique comporte également un bâti 16 dans lequel est disposé le boîtier 8. Le bâti 16 comporte un premier et un deuxième flasque d'extrémité 18, 20 et une paroi latérale 22 fixée aux deux flasques 18, 20, le premier flasque 18 est traversé par l'arbre rotatif. Le capteur de position 14 est fixé sur le premier flasque du bâti.

Le frein est destiné à exercer un effort résistant s'opposant au déplacement de l'élément d'interaction avec l'utilisateur. Cet effort résistant est déterminé à partir de motifs haptiques prédéfinis en fonction du rendu haptique que l'on souhaite reproduire, ces motifs sont enregistrés dans une base de données.

Un motif est défini par un effort de freinage à appliquer en fonction des données suivantes:
- la position angulaire courante du bouton,
- le sens de rotation courant du bouton,
- la vitesse de rotation du bouton.

Un motif haptique est donc un ensemble de valeurs d'effort de freinage à appliquer au bouton, i.e. un ensemble de valeurs définissant le motif, chaque valeur du motif haptique est associée à une position angulaire donnée du bouton et à un sens de rotation du bouton. Chaque valeur d'effort de freinage correspond à une valeur de viscosité apparente qui correspond à une valeur de champ magnétique qui correspond à une intensité de courant alimentant le système générant le champ magnétique, par exemple une bobine.

Il est bien entendu que la même valeur du motif peut être affectée pour des positions angulaires différentes, ou plusieurs positions linéaires différentes dans le cas d'une interface linéaire.

Sur la figure 2, on peut voir une représentation graphique d'un motif haptique quelconque. On représente la contrainte de freinage CF appliquée par le frein en fonction de la position angulaire en degré Θ. A chaque valeur d'angle correspond une valeur de contrainte de freinage.

L'interface haptique comporte une unité de commande UC destinée à générer des ordres audit système de génération de champ magnétique de sorte qu'il applique les valeurs du motif à reproduire. Sur la figure 1B, on peut voir une représentation schématique de l'interface I1.

Selon l'invention, l'unité de commande UC prend en compte la valeur de la vitesse d'actionnement du bouton, en plus du sens de déplacement, pour générer l'ordre au système de génération de champ magnétique.

Pour cela on définit quatre motifs:
- un motif MPL défini pour le sens d'actionnement considéré comme positif du bouton et pour une vitesse de rotation faible;
- un motif MPR pour le sens positif d'actionnement du bouton et pour une vitesse de rotation rapide;
- un motif MNL défini pour le sens d'actionnement considéré comme négatif du bouton et pour une vitesse de rotation faible;
- un motif MNR pour le sens d'actionnement du bouton négatif et pour une vitesse de rotation rapide.

La vitesse faible est une vitesse dont la valeur est inférieure ou égale à un seuil donné mais n'est pas nulle.

La vitesse rapide est considérée comme la vitesse maximale avec laquelle le bouton peut être actionné. La vitesse rapide dans le sens positif peut être égale ou différente de la vitesse rapide dans le sens négatif.

La vitesse d'actionnement est avantageusement approximée à partir des informations fournies par le capteur de position, ce qui permet d'offrir un système compact. Néanmoins on pourrait utiliser tout autre dispositif distinct du capteur de position pour déterminer la vitesse de rotation.

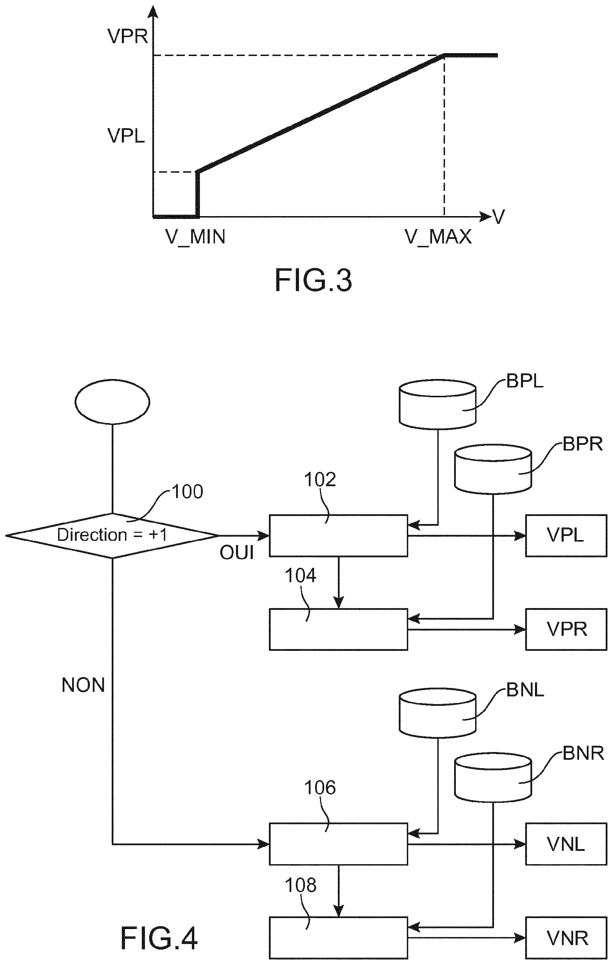

Sur la figure 4 est représenté un premier algorithme assurant le choix des valeurs de motifs à prendre en compte.

Lors d'une première étape 100, on détermine la position du bouton, la vitesse d'actionnement (variable VITESSE) et le sens d'actionnement (variable DIRECTION) à partir de l'information fournie par le capteur de position courante. La variable DIRECTION peut prendre la valeur +1 (sens de déplacement considéré comme positif), la valeur -1 (sens de déplacement considéré comme négatif) ou la valeur 0 lorsque la vitesse est nulle.

Si la variable DIRECTION est égale à +1, alors :
- on va chercher dans la base de données de motif positif à vitesse lente BPL la valeur de motif VPL (étape 102), et
- on va chercher dans la base de données de motif positif à vitesse rapide BPR la valeur de motif VPR (étape 104).

Les étapes 102 et 104 peuvent être simultanées ou séquentielles.

Sinon, i.e. si la variable DIRECTION est égale à -1 ou O, alors :
- on va chercher dans la base de données de motif négatif à vitesse lente BNL la valeur de motif VNL (étape 106), et
- on va chercher dans la base de données de motif négatif à vitesse rapide BNR la valeur de motif VNR (étape 108).

A la fin du déroulement du premier algorithme, on dispose de deux valeurs de motif soit VPL et VPR, soit VNL et VNR.

Sur la figue 5, on peut voir un exemple avantageux d'un deuxième algorithme permettant de déterminer la contrainte de freinage ou l'intensité du courant, celles-ci étant considérées comme proportionnelles, à appliquer au système de génération de champ magnétique.

Lors d'une première étape 200, on vérifie si la variable DIRECTION est égale à 0, si c'est le cas, dans cet exemple l'unité de commande génère un ordre au frein de n'appliquer aucune contrainte au bouton, i.e. aucun champ magnétique n'est appliqué au fluide. L'algorithme est terminé. Alternativement, il pourrait être décidé de maintenir le dernier champ magnétique appliqué. Cette étape pourrait avoir lieu avant l'étape 102.

Si la variable DIRECTION est différente de 0, i.e. si elle est égale à +1 ou - 1 alors, lors d'une étape suivante 202, on calcule le coefficient ALPHA qui est égal à : (abs(VITESSE) - V_MIN)/(V_MAX - V-MIN).

abs(VITESSE) étant la valeur absolue de la variable VITESSE,
V_MAX étant la valeur fixée de la vitesse maximale d'actionnement, cette valeur est fixée par exemple à la vitesse de rotation maximale usuelle avec laquelle un utilisateur actionne habituellement le bouton lorsqu'il souhaite réaliser des déplacements rapides et grossiers avec l'interface.

V_MIN étant la valeur fixée de la vitesse minimale d'actionnement, cette valeur est fixée par exemple à la vitesse de rotation minimale usuelle avec laquelle un utilisateur actionne habituellement le bouton lorsqu'il souhaite réaliser des déplacements lents et précis avec l'interface.

V_MAX correspond à la vitesse rapide à laquelle les motifs MPR et MNR sont établis sans correction.

V_MIN correspond à la vitesse lente à laquelle les motifs MPL et MNL sont établis sans correction.

Lors d'une étape suivante 204, on limite avantageusement le coefficient ALPHA ente 0 et 1 pour éviter des résultats de calcul aberrants, en effet il peut arriver que, de manière exceptionnelle, le bouton soit actionné à une vitesse supérieure à la vitesse maximale qui a été fixée, i.e. que le calcul de la valeur ALPHA fournisse un résultat supérieur à 1 puisque rien ne limite mécaniquement la vitesse d'actionnement. De même il peut arriver que, de manière exceptionnelle, le bouton soit actionné à une vitesse inférieure à la vitesse minimale qui a été fixée, i.e. que le calcul de la valeur ALPHA fournisse un résultat inférieur à 0 puisque il est possible de choisir pour V_MIN une valeur non nulle.

Lors d'une étape suivante 206, on calcule la variable MOTIF_COURANT à partir d'une interpolation linéaire sur la base des valeurs de motifs sélectionnées par le premier algorithme.
∘ MOTIF_COURANT = (1-ALPHA)^{∗} VPL + ALPHA^{∗} VPR si le sens d'actionnement est positif ou
∘ MOTIF_COURANT = (1-ALPHA)^{∗} VNL + ALPHA^{∗} VNR si le sens d'actionnement est négatif.

Lors d'une étape suivante 208, on applique la variable MOTIF_COURANT au frein.

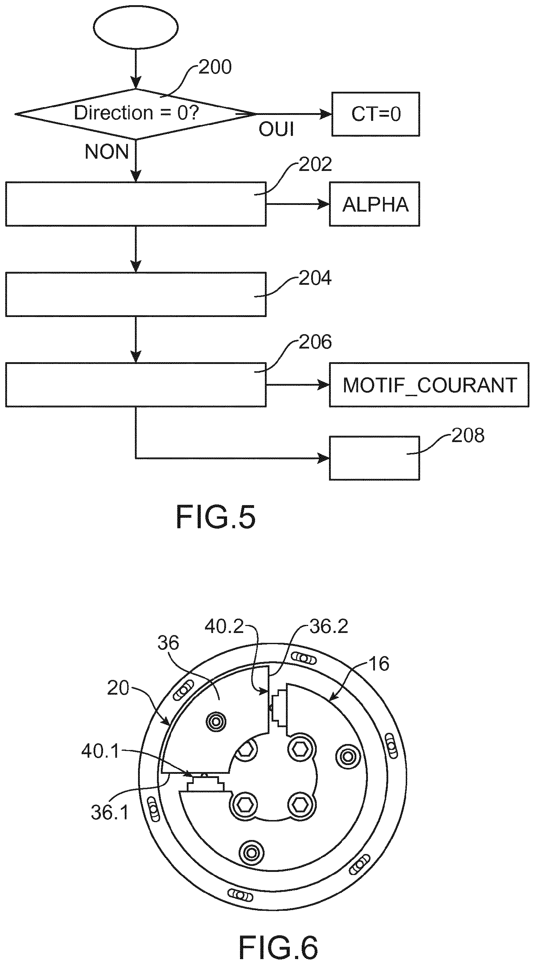

Dans l'algorithme de la figure 5, le MOTIF_COURANT est calculé à partir d'une interpolation linéaire. Sur la figure 3, on peut voir une représentation de ce motif en fonction de la vitesse d'actionnement dans le cas d'un actionnement dans le sens positif.

Toute autre interpolation, par exemple une interpolation quadratique, peut être utilisée.

Il peut également être envisagé d'utiliser une fonction seuil, le MOTIF_COURANT prenant une valeur pour une vitesse inférieure ou égale à une valeur seuil et prenant une autre valeur pour une vitesse supérieure à la valeur seuil.

Dans l'algorithme de la figure 5, on réalise une accentuation de l'effort de freinage avec la vitesse d'actionnement si on choisit de prendre VPR > VPL (respectivement VNR > VNL pour l'autre sens d'actionnement).

Il peut au contraire être prévu que l'effort de freinage diminue alors que la vitesse d'actionnement augmente ou encore que la relation entre le MOTIF COURANT et la vitesse ne soit pas monotone.

Les algorithmes décrits ci-dessus s'appliquent complètement à une interface haptique linéaire, le capteur de position déterminerait alors des positions longitudinales et non des positions angulaires.

Dans un mode de réalisation particulièrement avantageux, il est prévu de mettre en œuvre un système de détermination de l'intention d'action de l'utilisateur afin d'améliorer encore le rendu haptique général de l'interface.

Le système de détermination de l'intention d'action de l'utilisateur détecte le couple exercé par l'utilisateur sur le bouton dans le cas d'une interface rotative ou la force appliquée par l'utilisateur sur le bouton dans le cas d'une interface linéaire, et ceci avant qu'un déplacement du bouton perceptible par l'utilisateur et par le capteur de position lui soit appliqué.

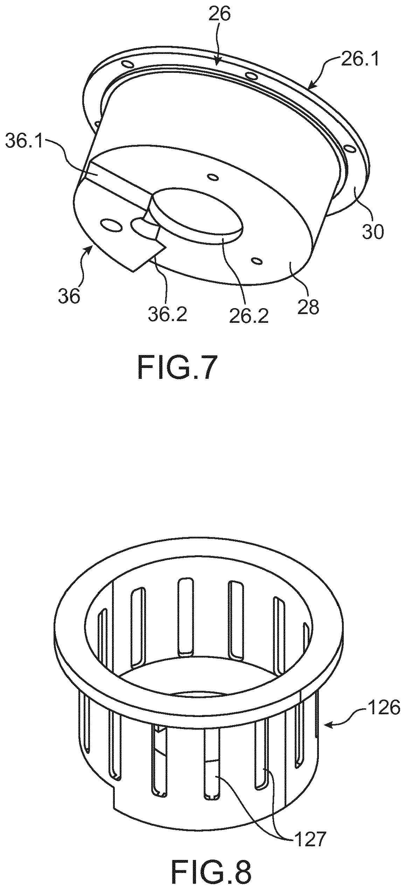

Dans l'exemple représenté sur les figures 1A et 6 un tel système est mis en œuvre, il comporte un corps d'épreuve 26 dont on va détecter la déformation provoquée par le couple appliqué par l'utilisateur avec des capteurs d'effort. Le corps d'épreuve est représenté seul sur la figure 7. Le corps d'épreuve 26 est fixé par une extrémité longitudinale 26.1 au bâti 16 et par l'autre extrémité longitudinale 26.2 au frein magnéto-rhéologique, au boîtier 8 dans l'exemple représenté. Les capteurs d'effort sont en contact avec le corps d'épreuve au niveau de son extrémité longitudinale 26.2 solidarisée au boîtier 8.

Dans l'exemple représenté sur les figures 1 et 6, le corps d'épreuve 26 comporte un corps de forme cylindrique à section circulaire fermé par un fond 28 à l'extrémité longitudinale 26.2. Une collerette annulaire 30 s'étend radialement vers l'extérieur au niveau de l'autre extrémité longitudinale 26.1.

Le diamètre intérieur du corps d'épreuve correspond au diamètre extérieur du boîtier 8, augmenté d'un jeu de fonctionnement. Le fond du corps d'épreuve est disposé entre le boîtier et le deuxième flasque 20 du bâti 16.

Le corps d'épreuve est solidarisé au bâti au moyen d'au moins une vis 32 traversant le flasque 18 et la collerette 30. Dans l'exemple représenté, les vis 32 servent également à lier le flasque 18 à la paroi latérale 28.

Le fond 28 du corps d'épreuve est fixé au boîtier 8 par au moins une vis 34.

Le corps d'épreuve 26 comporte également un élément 36 en saillie de son extrémité longitudinale 26.2 opposée à celle en contact avec le boîtier. L'élément 36 est reçu dans une cavité 38 ménagée dans le flasque 20 du bâti.

Dans l'exemple représenté, l'élément en saillie 36 a la forme d'une portion angulaire centrée sur l'axe longitudinal. La portion angulaire 36 est délimitée par deux faces 36.1, 36.2. La cavité 38 présente une forme correspondant à celle de la portion angulaire 36 et est délimitée par deux faces 38.1 38.2 chacune en regard d'une face 36.1, 36.2 de la portion angulaire 36. Un capteur d'effort 40.1 est monté sur la face 38.1 de la cavité en contact avec la face 36.1 de la portion angulaire et un capteur d'effort 40.2 est monté sur la face 38.2 de la cavité en contact avec la face 36.2 de la portion angulaire 36. Un contact mécanique de type ponctuel est assuré entre chaque capteur d'effort 40.1, 40.2 et le corps d'épreuve 26. Les capteurs d'effort 40.1, 40.2 sont avantageusement montés précontraints.

Ainsi, lorsqu'un couple est appliqué au bouton, celui-ci provoque une déformation par torsion du corps d'épreuve 26 par l'intermédiaire du boitier 8 lui-même en interaction avec le fluide, lui-même en interaction avec l'élément d'interaction 12, lui-même lié à l'arbre 2 Cette déformation est détectée par l'un ou l'autre des capteurs d'effort 40.1, 40.2 suivant le sens de rotation du bouton.

Le corps d'épreuve est par exemple en matériau plastique, tel que l'ABS.

Le matériau du corps d'épreuve et sa géométrie peuvent être déterminés en fonction du couple minimal et du couple maximal appliqués, de la sensibilité des capteurs d'effort et du seuil de détection souhaité. En outre, la déformation du corps d'épreuve est telle qu'elle n'est pas perceptible par l'utilisateur. Par exemple, on put considérer qu'une déformation du corps d'épreuve de quelques microns n'est pas perceptible par l'utilisateur.

Alternativement, on pourrait mesurer les efforts directement sur le boîtier 8 ou sur l'arbre rotatif, pour cela un capteur de couple serait mis en œuvre. Cependant un capteur de couple a un coût élevé et un encombrement important par rapport aux capteurs de force. Par ailleurs, un capteur de couple fournit une valeur du couple précise et calibrée alors que cette information n'est pas utile dans le cadre de l'invention.

Le capteur d'effort est par exemple réalisé à l'aide d'éléments piézorésistifs assemblés sous la forme d'un pont de Wheatstone, ils permettent une sensibilité de l'ordre de quelques dizaines de mV par Newton avec une raideur suffisamment élevée pour limiter le déplacement à quelques dizaines de microns à pleine charge. En variante, le ou les capteurs d'effort pourraient être remplacés par un ou des capteurs de déformation formés, par exemple, par des jauges de contrainte directement appliquées sur le corps d'épreuve pour détecter sa déformation.

Sur la figure 8, on peut voir un autre exemple d'un corps d'épreuve 126 dont la forme générale est identique à celle du corps d'épreuve 26, mais comporte en plus des lumières longitudinales 127 dans la paroi latérale du corps d'épreuve 126. De préférence, les lumières 127 sont réparties angulairement de manière régulière. Le corps d'épreuve présente dans cette réalisation une plus grande aptitude à la déformation. Il est par exemple réalisé en alliage d'aluminium.

Des lumières inclinées par rapport à l'axe longitudinal et/ou ayant une forme autre que rectiligne par exemple une forme courbée ne sortent pas du cadre de la présente invention. Par ailleurs les lumières n'ont pas nécessairement toutes les mêmes dimensions.

De manière avantageuse, on peut prévoir des moyens pour amplifier la déformation du corps d'épreuve sous une contrainte de torsion axiale tout en réduisant la déformation du corps d'épreuve pour toute autre contrainte non pertinente dans le cadre de l'invention, comme par exemple une contrainte radiale qui serait appliquée au bouton de manière parasite par l'utilisateur. La sensibilité de la détection est ainsi améliorée et les perturbations ou fausses détections peuvent être éliminées.

L'exemple de corps d'épreuve des figures 1A, 6 à 8 permet d'augmenter la sensibilité du dispositif de mesure en disposant les capteurs sur un diamètre le plus grand possible.

Dans l'exemple représenté et de manière avantageuse, les parois 36.1 et 36.2 de l'élément en saillie sont disposées à 90° l'une par rapport à l'autre. Ce positionnement associé à un contact ponctuel au niveau des capteurs d'effort 40.1 et 40.2 permet de décomposer la contrainte de déformation du corps d'épreuve et de privilégier la sensibilité aux efforts selon deux composantes orthogonales situées dans le plan du bâti 16. Ainsi par exemple, la sensibilité est fortement réduite pour des efforts parasites exercés perpendiculairement au plan du bâti 16. De plus, un traitement calculatoire ou algorithmique sur les composantes des forces orthogonales mesurées par les capteurs 40.1 et 40.2, comme par exemple un calcul basé sur la différence de mesure entre les deux capteurs pondéré par la composante commune de mesure des deux capteurs dans le cas d'un assemblage préférentiel des capteurs avec une précontrainte de charge, permet de réduire dans une certaine mesure la sensibilité aux efforts parasites exercés parallèlement au plan du bâti 16.

Un exemple de fonctionnement du dispositif dans lequel l'intention d'action de l'utilisateur est déterminée va maintenant être décrit.

L'utilisateur tourne le bouton autour de son axe dans un premier sens de rotation et l'amène dans une position angulaire définie comme une butée. Un champ magnétique est appliqué au fluide magnéto-rhéologique de sorte que sa variation de viscosité apparente génère un couple au niveau de l'élément d'interaction avec le fluide simulant une butée au niveau du bouton dans le premier sens de rotation.

Si l'utilisateur maintient son effort sur le bouton dans le premier sens de rotation, le corps d'épreuve 26 subit un couple de torsion via le boîtier, lui-même en interaction avec le fluide, lui-même en interaction avec l'élément d'interaction 12, lui-même lié à l'arbre 2

Cette déformation est mesurée par le capteur de force disposé en aval dans le premier sens de rotation. Le fait de savoir lequel des capteurs de force est sollicité permet de connaître le sens dans lequel l'utilisateur a l'intention de tourner le bouton. De manière préférentielle, on peut combiner les mesures issues des deux capteurs de force assemblés avec une précontrainte de charge pour déterminer le sens dans lequel l'utilisateur a l'intention de tourner le bouton. La détection d'un couple minimal permet de confirmer que l'utilisateur a effectivement l'intention de faire pivoter le bouton. Il en est déduit que l'utilisateur a l'intention de maintenir le bouton en butée. Le champ magnétique est maintenu de sorte à opposer un effort au mouvement de l'élément d'interaction 12 via le fluide magnéto-rhéologique visqueux.

Si l'utilisateur a l'intention de faire pivoter le bouton dans un deuxième sens opposé au premier sens, c'est le capteur d'effort disposé en amont en considérant le premier sens de rotation, qui va être sollicité. De manière préférentielle, on peut combiner les mesures issues des deux capteurs de force assemblés avec une précontrainte de charge pour déterminer le nouveau sens dans lequel l'utilisateur a l'intention de tourner le bouton. On en déduit l'intention de l'utilisateur, cette intention est confirmée par la détection d'un couple minimal. Dans ce cas, le champ magnétique est annulé, la viscosité apparente du fluide diminue fortement, l'élément d'interaction peut donc tourner dans le deuxième sens sans ressentir d'effet de collage. On peut ainsi reproduire grâce à l'invention le fonctionnement d'une roue libre.

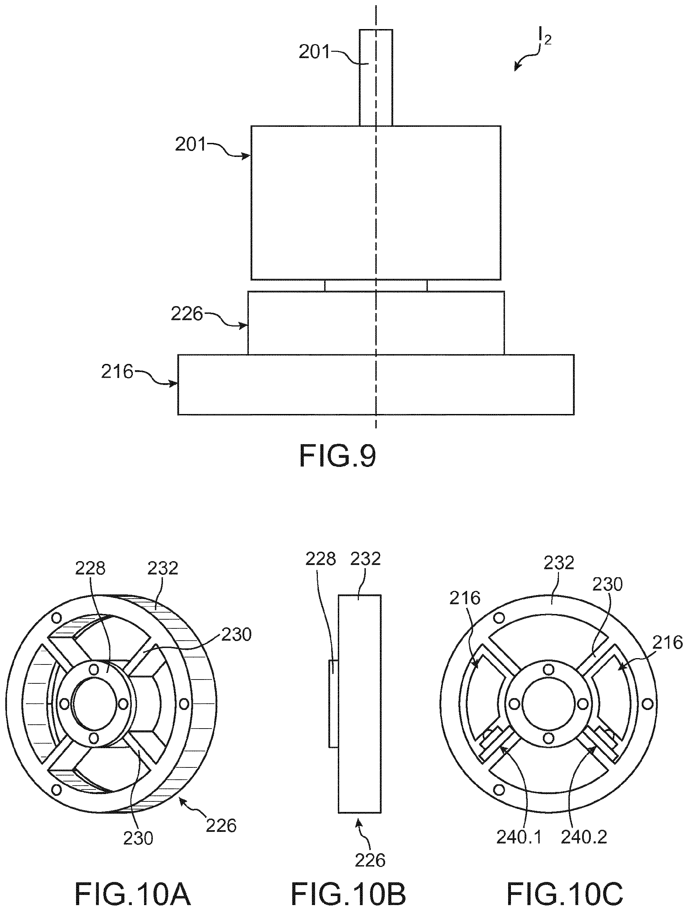

Sur les figures 9 et 10A à 10C, on peut voir un autre exemple de réalisation d'une interface I2 selon l'invention comportant un bâti 216, un frein 204, un corps d'épreuve 226 ayant la forme d'une roue et un élément d'interaction avec l'utilisateur 201, l'élément d'interaction avec le fluide n'étant pas visible.

La roue comporte un moyeu 228, un anneau extérieur 232 et des rayons 230 reliant le moyeu 228 à l'anneau extérieur 232.

Dans cet exemple, le moyeu 228 est solidarisé au boîtier de l'interface par exemple par des vis traversant axialement le moyeu 228 et l'anneau extérieur 232 est solidarisé au bâti par exemple par des vis traversant axialement l'anneau extérieur.

Deux capteurs d'effort 240.1, 240.2 sont disposés en appui chacun contre un rayon 230 et disposés par rapport aux rayons de sorte que, lorsque le corps d'épreuve 226 est sollicité dans un sens de rotation, un seul des capteurs est sollicité. Les capteurs d'efforts sont fixés sur le bâti 216 et en appui contre une face d'un rayon 230. En variante, les capteurs d'effort pourraient être assemblés avec une précontrainte de charge, ou, comme cela a été mentionné ci-dessus, être remplacés par des jauges d'élongation disposées sur le corps d'épreuve et détectant la déformation par exemple des rayons sous l'effet du couple de torsion. Plus généralement les capteurs d'effort peuvent être remplacés par des capteurs de déformation.

Le fonctionnement de ce dispositif est similaire à celui du dispositif de la figure 1A décrit ci-dessus.

Des moyens permettant d'appliquer des contraintes mécaniques au corps d'épreuve, comme de moyens de guidage en rotation ou en translation, peuvent avantageusement être ajoutés, ce qui permet de réduire le nombre de capteurs de force en assemblant ce dernier avec une précontrainte de charge.

Les données issues de ces capteurs de force ou de déformation sont traitées par un système électronique afin de déterminer si le couple exercé par l'utilisateur sur l'interface dépasse un seuil prédéterminé. Le signe de couple est également déterminé et permet de connaître le sens dans lequel l'utilisateur a l'intention de déplacer le bouton.

Comme cela a été indiqué ci-dessus, la connaissance de la valeur réelle du couple de torsion n'est pas nécessaire, la connaissance du sens de torsion est suffisante. On peut donc mettre en œuvre des capteurs bas coût permettant de détecter au minimum un seuil binaire ou une fonction monotone de l'effort ou de la déformation, en dehors de toute spécification de type linéarité, dynamique, résolution, etc., dans la mesure où le capteur est suffisamment sensible pour détecter un couple minimum agissant sur l'interface sans qu'il n'y ait mise en rotation de cette dernière. Le capteur est aussi tel qu'il est capable de tenir un effort maximal sans dégradation.

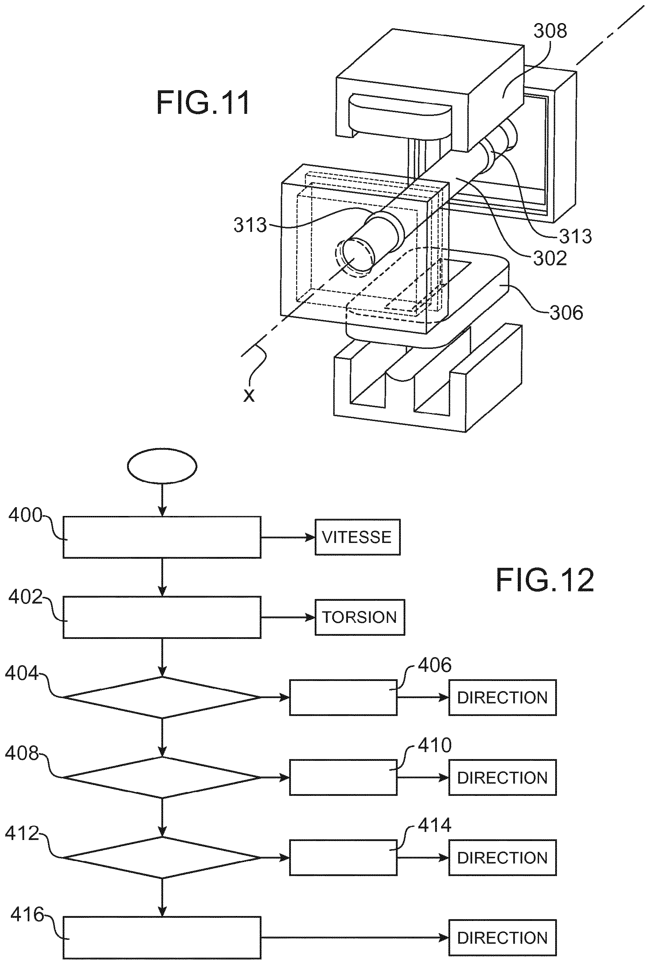

Sur la figure 11, on peut voir une vue en éclaté d'un exemple représenté schématiquement d'une interface linéaire selon l'invention.

Le dispositif comporte un boîtier 308 dans lequel est monté un axe 302 mobile axialement le long de son axe X, l'axe 302 étant destiné à porter un élément d'interaction avec l'utilisateur (non représenté) au niveau d'au moins l'une de ses extrémités longitudinales, des moyens de génération d'un champ magnétique variable 306 sont disposés dans le boîtier. Le boîtier délimite une chambre étanche qui contient du fluide magnéto-rhéologique et qui est traversée par l'axe 302. Des joints 313 assurent un coulissement étanche de l'arbre dans la chambre.

L'interface comporte également un capteur de position (non représenté) permettant de mesurer la position longitudinale courante de l'axe 302.

L'interface comporte également des moyens pour détecter l'intention d'action de l'utilisateur, ces moyens détectent alors une force de translation appliquée par l'utilisateur sur l'axe avant qu'un déplacement de l'axe perceptible par l'utilisateur et par le capteur de position lui soit appliqué. Ces moyens comportent un corps d'épreuve (non représenté) dont la déformation est mesurée par un ou des capteurs de force ou de déformation, le corps d'épreuve étant fixé sur le boîtier et sur le bâti (non représenté). Si l'utilisateur a l'intention de déplacer l'axe dans le premier sens de translation, le corps d'épreuve subit une force de cisaillement via le boîtier, lui-même en interaction avec le fluide, lui-même en interaction avec l'élément d'interaction, lui-même lié à l'axe 302.

Nous allons maintenant décrire des algorithmes permettant de faire fonctionner l'interface haptique selon l'invention et tenant compte de l'intention d'action de l'utilisateur.

Dans le cas présent, nous nous intéressons particulièrement aux cas où la vitesse de rotation du bouton est nulle ou au moins inférieure à une valeur en dessous de laquelle on considère que le déplacement du bouton est imperceptible.

L'électronique de contrôle utilise conjointement les informations du capteur de position angulaire et les informations des capteurs d'effort pour déterminer le couple résistant que doit générer le frein 4.

L'algorithme représenté sur la figure 12 est appliqué pour déterminer le sens de rotation dans lequel le bouton est tourné ou dans lequel l'utilisateur a l'intention de le tourner.

On utilise la variable TORSION qui est une estimation du couple de torsion. Une connaissance de la valeur précise du couple n'est pas requise. Cette estimation est obtenue à partir des informations fournies par le capteur de force qui est sollicité par le corps d'épreuve dans l'exemple de réalisation des figures 1A, 6 à 8. L'estimation du couple de torsion permet de savoir si celui-ci est supérieur ou inférieur à des valeurs seuils en tenant compte du sens dans lequel s'applique le couple de torsion.

Lors d'une première étape 400, la vitesse de déplacement du bouton est calculée. On obtient la variable VITESSE.

On considère que la vitesse est nulle lorsqu'elle est inférieure à une valeur réelle donnée et par conséquent l'approximation de la dérivée des informations fournies par le capteur angulaire échantillonné à une cadence Te retourne à une valeur nulle.

Lors d'une étape suivante 402, on calcule la fonction d'estimation du moment de torsion appliqué par l'utilisateur à partir des informations fournies par les capteurs d'effort, cette fonction est la variable TORSION.

Lors d'une étape suivante 404, on vérifie si la variable VITESSE est nulle, si elle n'est pas nulle, on affecte à la variable DIRECTION le signe de la vitesse (étape 406).

Si la variable VITESSE est nulle, on utilise la variable TORSION.

Dans une étape suivante 408; on vérifie si la variable TORSION est supérieure à un seuil dit "Seuil positif", si c'est le cas on affecte à la variable DIRECTION la valeur +1 (étape 410).

Sinon dans une étape suivante 412, on vérifie si la variable TORSION est inférieure à un seuil dit "Seuil négatif", si c'est le cas on affecte à la variable DIRECTION la valeur -1 (étape 414).

Sinon, i.e. si la vitesse est nulle et le couple de torsion est supérieur au seuil négatif et est inférieur au seuil positif, alors, lors une étape suivante 316, la variable DIRECTION prend la valeur nulle. Le système considère qu'aucun couple n'est appliqué au bouton, il peut par exemple en être déduit que l'utilisateur a lâché le bouton.

Grâce à cet algorithme, il peut être déterminé dans le cas où la vitesse de déplacement du bouton est nulle le sens dans lequel l'utilisateur à l'intention de déplacer le bouton sans déplacement significatif de celui-ci.

En effet, on peut grâce aux informations fournies uniquement par le ou les capteurs de force ou de déformation déterminer dans quel sens le couple de torsion s'applique, même sans déplacement significatif du bouton, et donc décider dans quel sens l'utilisateur a l'intention de déplacer le bouton, et sur cette base commander le système de génération d'un champ magnétique variable en conséquence.

Ensuite; on applique une variante de l'algorithme de la figure 4.

Dans cette variante, on définit les quatre motifs suivants:
- un motif MPL' défini pour le sens d'actionnement considéré comme positif du bouton et pour une vitesse de rotation nulle ou faible;
- un motif MPR' pour le sens positif d'actionnement du bouton et pour une vitesse de rotation rapide;
- un motif MNL' défini pour le sens d'actionnement considéré comme négatif du bouton et pour une vitesse de rotation nulle ou faible;
- un motif MNR' pour le sens d'actionnement du bouton négatif et pour une vitesse de rotation rapide.

La vitesse nulle ou faible est une vitesse dont la valeur est inférieure ou égale à un seuil donné. Puisque l'on détermine l'intention d'action de l'utilisateur, on peut définir une vitesse nulle dans le sens positif et une vitesse nulle dans le sens négatif. En effet l'utilisateur peut ne pas déplacer le bouton, la variable VITESSE est égale à 0 mais le couple exercé dans un sens ou dans l'autre peut être différent de 0. L'absence d'intention d'action de l'utilisateur est donnée lorsque la variable DIRECTION = 0.

Comme précédemment, la vitesse rapide est considérée comme la vitesse maximale avec laquelle le bouton peut être actionné. La vitesse rapide dans le sens positif peut être égale ou différente de la vitesse rapide dans le sens négatif.

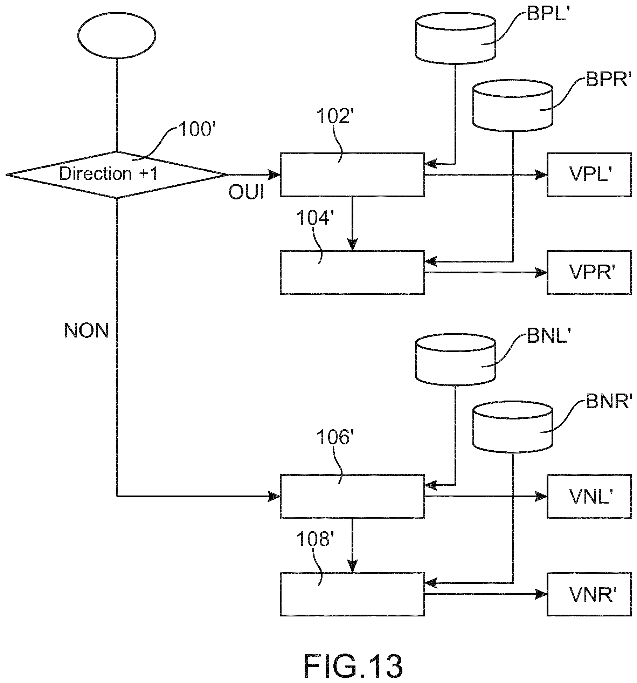

Sur la figure 13 est représentée la variante de l'algorithme de la figure 4 assurant le choix des valeurs de motifs à prendre en compte.

Lors d'une première étape 100', on vérifie si la variable DIRECTION est égale à +1, si c'est le cas alors :
- on va chercher dans la base de données de motif positif à vitesse lente BPL' la valeur de motif VPL' (étape 102'), et
- on va chercher dans la base de données de motif positif à vitesse rapide BPR' la valeur de motif VPR' (étape 104').

Les étapes 102' et 104 peuvent être simultanées ou séquentielles.

Sinon, i.e. si la variable DIRECTION est égale à 0 ou -1, alors :
- on va chercher dans la base de données de motif négatif à vitesse lente BNL' la valeur de motif VNL' (étape 106), et
- on va chercher dans la base de données de motif négatif à vitesse rapide BNR' la valeur de motif VNR' (étape 108).

A la fin du déroulement du premier algorithme, on dispose de deux valeurs de motif soit VPL' et VPR', soit VNL' et VNR'.

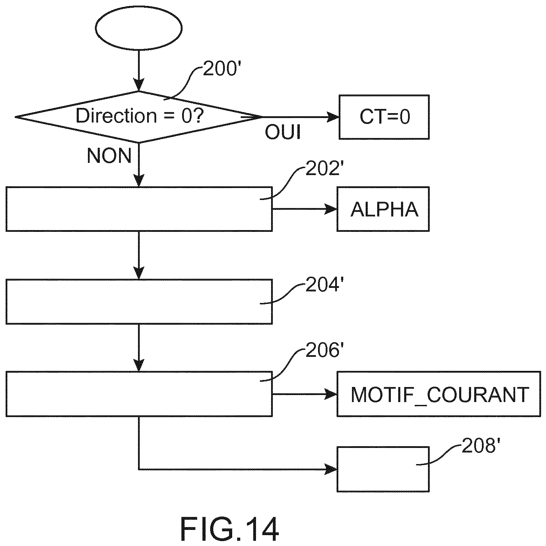

Une variante de l'algorithme de la figure 5 représentée sur la figure 14 est ensuite appliquée pour effectivement déterminer la valeur de la contraint de freinage à appliquer, i.e. le champ magnétique à appliquer, et donc l'intensité du courant qui va alimenter le système de génération de champ magnétique.

Lors d'une première étape 200', on vérifie si la variable DIRECTION est égale à 0, si c'est le cas, l'unité de commande génère un ordre au frein de n'appliquer aucune contrainte au bouton, i.e. aucun champ magnétique n'est appliqué au fluide. L'algorithme est terminé. Dans cet algorithme, le fait que DIRECTION = 0 signifie que l'on a déterminé que l'utilisateur n'avait pas l'intention d'actionner le bouton dans un sens ou dans l'autre. Il peut par exemple en être déduit que l'utilisateur a lâché le bouton. Cette étape pourrait avoir lieu avant l'étape 102'.

Si la variable DIRECTION est différente de 0, i.e. si elle est égale à +1 ou -1 alors, lors d'une étape suivante 202', on calcule le coefficient ALPHA qui est égal à : abs(VITESSE)/V_MAX.

abs(VITESSE) étant la valeur absolue de la vitesse courante,
PARAMETRE V_MAX étant la valeur fixée de la vitesse maximale d'actionnement.

Lors d'une étape suivante 204', on limite avantageusement le coefficient ALPHA ente 0 et 1 pour éviter les erreurs de calcul, en effet il peut arriver que, de manière exceptionnelle, le bouton soit actionné à une vitesse supérieure à la vitesse maximale qui a été fixée, i.e. que ALPHA soit supérieur à 1 puisque rien ne limite mécaniquement la vitesse d'actionnement.

Lors d'une étape suivante 206', on calcule la variable MOTIF_COURANT à partir d'une interpolation linéaire sur la base des valeurs de motifs sélectionnées par le premier algorithme.
∘ MOTIF_COURANT = (1-ALPHA)^{∗} VPL' + ALPHA^{∗} VPR' si le sens d'actionnement est positif ou
∘ MOTIF_COURANT = (1-ALPHA)^{∗} VNL' + ALPHA^{∗} VNR' si le sens d'actionnement est négatif.

Lors d'une étape suivante 208', on applique la variable MOTIF_COURANT au frein.

Comme pour l'algorithme de la figure 5, le MOTIF_COURANT pourrait être calculé avec toute autre interpolation, par exemple une interpolation quadratique, peut être utilisée. Il peut également être envisagé d'utiliser une fonction seuil.

Les algorithmes décrits ci-dessus s'appliquent complètement à une interface haptique linéaire, le capteur de position détermine alors des positions longitudinales et non des positions angulaires.

Le fait de connaître l'absence d'intention de l'utilisateur permet par exemple de couper l'alimentation du courant du système générant le champ magnétique en étant sûr que l'utilisateur n'a pas l'intention de déplacer le bouton, ce qui améliore le rendu haptique. Au contraire, sans cette connaissance le courant pourrait être coupé de manière fortuite alors que l'utilisateur a déjà appliqué un couple au bouton non perçu par le système.

L'interface haptique selon l'invention est particulièrement adaptée à une application dans des véhicules automobiles, par exemple pour former une interface haptique embarquée assistant le conducteur automobile. Elle peut permettre à l'utilisateur d'interagir avec différents équipements ou accessoires du véhicule comme le GPS (Global Positioning System en terminologie anglaise ou Système de positionnement mondial), la radio, la climatisation...

## Revendications

1. Interface haptique comportant :
- un élément d'interaction (1) avec un utilisateur apte à se déplacer dans un premier sens et dans un deuxième sens,
- un élément d'interaction (12) avec un fluide dont la viscosité varie en fonction d'un stimulus extérieur, l'élément d'interaction (12) avec le fluide étant solidaire au moins en translation ou au moins en rotation de l'élément d'interaction (1) avec l'utilisateur,
- un frein comportant un fluide dont la viscosité apparente varie en fonction d'un stimulus extérieur et un système de génération (6) dudit stimulus sur commande dans ledit fluide, l'élément d'interaction (12) avec le fluide étant disposé dans le fluide,
- des moyens de détermination d'une position courante (14) de l'élément d'interaction (1) avec l'utilisateur,
- des moyens de détermination de la vitesse de l'élément d'interaction (1) avec l'utilisateur,
- une unité de commande apte à envoyer des ordres audit système de génération dudit stimulus, l'unité de commande comportant des moyens pour générer lesdits ordres en fonction de la position courante de l'élément d'interaction avec l'utilisateur et de la vitesse d'actionnement courante de l'élément d'interaction avec l'utilisateur,
**caractérisée en ce que** l'unité de commande comporte au moins :
- une première base de données contenant des valeurs d'un premier motif haptique lorsque la norme de la vitesse d'actionnement est inférieure ou égale à une première valeur donnée et n'est pas nulle et l'élément d'interaction avec l'utilisateur se déplace dans le premier sens,
- une deuxième base de données contenant des valeurs d'un deuxième motif haptique lorsque la norme de la vitesse d'actionnement est au moins égale à une deuxième valeur donnée et l'élément d'interaction avec l'utilisateur se déplace dans le premier sens,
- une troisième base de données contenant des valeurs d'un troisième motif haptique lorsque la norme de la vitesse d'actionnement est inférieure ou égale à une troisième valeur donnée et n'est pas nulle et l'élément d'interaction avec l'utilisateur se déplace dans le deuxième sens,
- une quatrième base de données contenant des valeurs d'un quatrième motif haptique lorsque la norme de la vitesse d'actionnement est au moins égale à une quatrième valeur donnée et l'élément d'interaction avec l'utilisateur se déplace dans le deuxième sens, et
dans laquelle les moyens aptes à générer les ordres utilisent suivant le sens d'actionnement de l'élément d'interaction avec l'utilisateur, la première et/ou la deuxième bases de données ou la troisième et/ou la quatrième bases de données pour déterminer une valeur d'un nouveau motif haptique sur la base de laquelle un ordre est généré .

2. Interface haptique comportant :
- un élément d'interaction (1) avec un utilisateur apte à se déplacer dans un premier sens et dans un deuxième sens,
- un élément d'interaction (12) avec un fluide dont la viscosité varie en fonction d'un stimulus extérieur, l'élément d'interaction (12) avec le fluide étant solidaire au moins en translation ou au moins en rotation de l'élément d'interaction (1) avec l'utilisateur,
- un frein comportant un fluide dont la viscosité apparente varie en fonction d'un stimulus extérieur et un système de génération (6) dudit stimulus sur commande dans ledit fluide, l'élément d'interaction (12) avec le fluide étant disposé dans le fluide,
- des moyens de détermination d'une position courante (14) de l'élément d'interaction (1) avec l'utilisateur,
- des moyens de détermination de la vitesse de l'élément d'interaction (1) avec l'utilisateur,
- une unité de commande apte à envoyer des ordres audit système de génération dudit stimulus, l'unité de commande comportant des moyens pour générer lesdits ordres en fonction de la position courante de l'élément d'interaction avec l'utilisateur et de la vitesse d'actionnement courante de l'élément d'interaction avec l'utilisateur,
**caractérisée en ce que** l'interface haptique comporte de plus
- des moyens pour déterminer l'intention d'action de l'utilisateur sur l'élément d'interaction avec l'utilisateur, comprenant des moyens pour détecter le couple exercé par un utilisateur sur l'élément d'interaction (1) avec l'utilisateur, dans le cas d'un élément d'interaction avec l'utilisateur mobile en rotation, afin de connaître le sens du couple et si le couple est supérieur à une valeur donnée pour un sens donné, l'unité de commande commandant le système de génération (6) dudit stimulus sur la base des informations obtenues sur le couple au moins lorsqu'une vitesse nulle, ou au moins inférieure à une valeur en dessous de laquelle le déplacement est imperceptible pour l'utilisateur, de l'élément d'interaction (1) avec l'utilisateur est détectée, ou des moyens pour détecter l'effort exercé par un utilisateur sur l'élément d'interaction (1) avec l'utilisateur, dans le cas d'un élément d'interaction avec l'utilisateur mobile en translation, afin de connaître le sens de la force et si la force est supérieure à une valeur donnée pour un sens donné, l'unité de commande commandant le système de génération (6) dudit stimulus sur la base des informations obtenues sur la force au moins lorsqu'une vitesse nulle, ou vitesse au moins inférieure à une valeur en dessous de laquelle le déplacement est imperceptible pour l'utilisateur, de l'élément d'interaction (1) avec l'utilisateur est détectée,
et **en ce que** l'unité de commande comporte au moins :
- une première base de données contenant des valeurs d'un premier motif haptique lorsque la norme de la vitesse d'actionnement est inférieure ou égale à une première valeur donnée et l'élément d'interaction avec l'utilisateur se déplace dans le premier sens,
- une deuxième base de données contenant des valeurs d'un deuxième motif haptique lorsque la norme de la vitesse d'actionnement est au moins égale à une deuxième valeur donnée et l'élément d'interaction avec l'utilisateur se déplace dans le premier sens,
- une troisième base de données contenant des valeurs d'un troisième motif haptique lorsque la norme de la vitesse d'actionnement est inférieure ou égale à une troisième valeur donnée et l'élément d'interaction avec l'utilisateur se déplace dans le deuxième sens,
- une quatrième base de données contenant des valeurs d'un quatrième motif haptique lorsque la norme de la vitesse d'actionnement est au moins égale à une quatrième valeur donnée et l'élément d'interaction avec l'utilisateur se déplace dans le deuxième sens, et
dans laquelle les moyens aptes à générer les ordres utilisent suivant le sens d'actionnement de l'élément d'interaction avec l'utilisateur, la première et/ou la deuxième bases de données ou la troisième et/ou la quatrième bases de données pour déterminer une valeur d'un nouveau motif haptique sur la base de laquelle un ordre est généré .

3. Interface haptique selon la revendication 2, dans laquelle les moyens pour détecter le couple ou la force appliqué par l'utilisateur sur l'élément d'interaction avec l'utilisateur comportent au moins un capteur d'effort (40.1, 40.2, 240.1, 240.2), préférentiellement monté en précontrainte ou au moins un capteur de la déformation provoquée par le couple ou la force à l'un des éléments de l'interface haptique.

4. Interface haptique selon la revendication 2 ou 3, comportant un corps d'épreuve (26, 126, 226) qui est disposé de sorte à être déformé par le couple ou la force appliqué par l'utilisateur sur l'élément d'interaction (1) avec l'utilisateur, les moyens pour détecter le couple ou la force étant en contact avec ledit corps d'épreuve (26, 126, 226).

5. Interface haptique selon la revendication 4, dans laquelle le corps d'épreuve (26, 126, 226) est en un matériau tel que sa déformation n'est pas perceptible par l'utilisateur.

6. Interface haptique selon l'une des revendications 1 à 5, dans laquelle les moyens générant les ordres mettent en œuvre une interpolation, par exemple une interpolation linéaire, entre une valeur de la première base de données et une valeur de la deuxième base de données ou entre une valeur de la troisième base de données et une valeur de la quatrième base de données.

7. Interface haptique selon l'une des revendications 1 à 6, dans laquelle la deuxième vitesse donnée est fixée comme étant la vitesse d'actionnement maximale dans le premier sens d'actionnement et la quatrième vitesse donnée est fixée comme étant la vitesse d'actionnement maximale dans le deuxième sens d'actionnement

8. Interface haptique selon l'une des revendications 1 à 7, dans laquelle le fluide est un fluide magnéto-rhéologique, le stimulus étant un champ magnétique et dans laquelle les ordres générés sont des intensités de courant.

9. Interface haptique selon l'une des revendications 1 à 8, dans laquelle les moyens pour déterminer la vitesse d'actionnement calculent les dérivées des informations fournis par les moyens de détermination de la position courante.

10. Interface haptique selon l'une des revendications 1 à 9, dans laquelle l'élément d'interaction (1) avec l'utilisateur est mobile en rotation et est solidaire d'un arbre de rotation (2) d'axe longitudinal (X) duquel est solidaire en rotation l'élément d'interaction (12) avec le fluide, les moyens de mesure de la position courante étant un capteur de position angulaire.

11. Interface haptique selon l'une des revendications 1 à 10, dans laquelle l'élément d'interaction (1) avec l'utilisateur est mobile en translation.

12. Procédé de commande d'une interface haptique selon l'une des revendications 1 à 11, comportant les étapes:
a) détermination de la position courante de l'élément d'interaction avec l'utilisateur,
b) détermination de la vitesse de l'élément d'interaction avec l'utilisateur,
c) détermination du sens d'actionnement,
d) détermination, pour le sens d'actionnement déterminé, d'une valeur d'un motif haptique pour la vitesse d'actionnement déterminée, la valeur d'un motif haptique étant déterminée à partir d'une première valeur d'un motif haptique pour une vitesse d'actionnement inférieure à une première valeur donnée et non nulle et d'une deuxième valeur d'un motif haptique pour une vitesse d'actionnement au moins égale à une deuxième valeur donnée.
e) génération d'un ordre au système de génération dudit stimulus.

13. Procédé de commande selon la revendication 12, dans lequel l'étape d) est une étape de calcul de ladite valeur d'un motif haptique pour la vitesse d'actionnement déterminée au moyen d'une fonction seuil, la valeur du motif pour la vitesse d'actionnement déterminée étant soit la première valeur d'un motif haptique pour une vitesse d'actionnement inférieure à une première valeur donnée, soit la deuxième valeur d'un motif haptique pour une vitesse d'actionnement au moins égale à une deuxième valeur donnée.

14. Procédé de commande d'une interface haptique selon l'une des revendications 2 à 5, comportant les étapes:
a) détermination de la position courante de l'élément d'interaction avec l'utilisateur,
b) détermination de la vitesse de l'élément d'interaction avec l'utilisateur,
c) détermination du sens d'actionnement,
d) détermination, pour le sens d'actionnement déterminé, d'une valeur d'un motif haptique pour la vitesse d'actionnement déterminée,
e) génération d'un ordre au système de génération dudit stimulus, ledit procédé comportant un étape préalable à l'étape d) de détermination d'une intention d'action de l'utilisateur sur l'élément d'interaction avec l'utilisateur, et dans lequel lors de l'étape d), la valeur d'un motif haptique est déterminée à partir d'une première valeur d'un motif haptique pour une vitesse d'actionnement inférieure ou égale à une première valeur donnée éventuellement nulle et d'une deuxième valeur d'un motif haptique pour une vitesse d'actionnement au moins égale à une deuxième valeur donnée.

15. Procédé de commande selon l'une des revendications 12 à 14, dans lequel l'étape d) est une étape de calcul de ladite valeur d'un motif haptique pour la vitesse d'actionnement déterminée par interpolation, par exemple par interpolation linéaire.

## Patentansprüche

1. Haptische Schnittstelle, enthaltend:
- ein Element (1) zur Interaktion mit einem Nutzer, das dazu geeignet ist, sich in einer ersten Richtung und in einer zweiten Richtung zu bewegen,
- ein Element (12) zur Interaktion mit einem Fluid, dessen Viskosität sich in Abhängigkeit von einem äußeren Reiz verändert, wobei das Element (12) zur Interaktion mit dem Fluid zumindest verschiebefest oder zumindest drehfest mit dem Element (1) zur Interaktion mit dem Nutzer verbunden ist,
- eine Bremse, die ein Fluid enthält, dessen scheinbare Viskosität sich in Abhängigkeit von einem äußeren Reiz verändert, und ein System (6) zum Erzeugen des Reizes auf Befehl in dem Fluid, wobei das Element (12) zur Interaktion mit dem Fluid in dem Fluid angeordnet ist,
- Mittel zum Bestimmen einer aktuellen Position (14) des Elements (1) zur Interaktion mit dem Nutzer,
- Mittel zum Bestimmen der Geschwindigkeit des Elements (1) zur Interaktion mit dem Nutzer,
- eine Steuereinheit, die dazu geeignet ist, Befehle an das System zum Erzeugen des Reizes zu senden, wobei die Steuereinheit Mittel zum Erzeugen der Befehle in Abhängigkeit von der aktuellen Position des Elements zur Interaktion mit dem Nutzer und der aktuellen Betätigungsgeschwindigkeit des Elements zur Interaktion mit dem Nutzer enthält,
**dadurch gekennzeichnet, dass**
die Steuereinheit zumindest enthält:
- eine erste Datenbank, die Werte eines ersten haptischen Musters enthält, wenn die Norm der Betätigungsgeschwindigkeit kleiner oder gleich einem ersten gegebenen Wert und nicht Null ist und sich das Element zur Interaktion mit dem Nutzer in der ersten Richtung bewegt,
- eine zweite Datenbank, die Werte eines zweiten haptischen Musters enthält, wenn die Norm der Betätigungsgeschwindigkeit zumindest gleich einem gegebenen zweiten Wert ist und sich das Element zur Interaktion mit dem Nutzer in der ersten Richtung bewegt,
- eine dritte Datenbank, die Werte eines dritten haptischen Musters enthält, wenn die Norm der Betätigungsgeschwindigkeit kleiner oder gleich einem gegebenen dritten Wert und nicht Null ist und sich das Element zur Interaktion mit dem Nutzer in der zweiten Richtung bewegt,
- eine vierte Datenbank, die Werte eines vierten haptischen Musters enthält, wenn die Norm der Betätigungsgeschwindigkeit zumindest gleich einem gegebenen vierten Wert ist und sich das Element zur Interaktion mit dem Nutzer in der zweiten Richtung bewegt, und
wobei die Mittel, die zum Erzeugen der Befehle geeignet sind, je nach Betätigungsrichtung des Elements zur Interaktion mit dem Nutzer die erste und/oder die zweite Datenbank oder die dritte und/oder die vierte Datenbank verwenden, um einen Wert eines neuen haptischen Musters zu bestimmen, auf dessen Grundlage ein Befehl erzeugt wird.

2. Haptische Schnittstelle, enthaltend:
- ein Element (1) zur Interaktion mit einem Nutzer, das dazu geeignet ist, sich in einer ersten Richtung und in einer zweiten Richtung zu bewegen,
- ein Element (12) zur Interaktion mit einem Fluid, dessen Viskosität sich in Abhängigkeit von einem äußeren Reiz verändert, wobei das Element (12) zur Interaktion mit dem Fluid zumindest verschiebefest oder zumindest drehfest mit dem Element (1) zur Interaktion mit dem Nutzer verbunden ist,
- eine Bremse, die ein Fluid enthält, dessen scheinbare Viskosität sich in Abhängigkeit von einem äußeren Reiz verändert, und ein System (6) zum Erzeugen des Reizes auf Befehl in dem Fluid, wobei das Element (12) zur Interaktion mit dem Fluid in dem Fluid angeordnet ist,
- Mittel zum Bestimmen einer aktuellen Position (14) des Elements (1) zur Interaktion mit dem Nutzer,
- Mittel zum Bestimmen der Geschwindigkeit des Elements (1) zur Interaktion mit dem Nutzer,
- eine Steuereinheit, die dazu geeignet ist, Befehle an das System zum Erzeugen des Reizes zu senden, wobei die Steuereinheit Mittel zum Erzeugen der Befehle in Abhängigkeit von der aktuellen Position des Elements zur Interaktion mit dem Nutzer und der aktuellen Betätigungsgeschwindigkeit des Elements zur Interaktion mit dem Nutzer enthält,
**dadurch gekennzeichnet, dass**
die haptische Schnittstelle ferner enthält:
- Mittel zum Ermitteln der Absicht des Nutzers, auf das Element zur Interaktion mit dem Nutzer einzuwirken, enthaltend Mittel zum Erfassen des von einem Nutzer auf das Element (1) zur Interaktion mit dem Nutzer ausgeübten Drehmoments im Falle eines drehbaren Elements zur Interaktion mit dem Nutzer, um die Richtung des Drehmoments zu erkennen und um zu erkennen, ob das Drehmoment größer als ein gegebener Wert für eine gegebene Richtung ist, wobei die Steuereinheit das System (6) zum Erzeugen des genannten Reizes auf der Grundlage der Informationen steuert, die über das Drehmoment zumindest dann erhalten werden, wenn eine Drehzahl von Null oder zumindest kleiner als ein Wert, unterhalb dessen die Bewegung für den Nutzer des Elements (1) zur Interaktion mit dem Nutzer nicht wahrnehmbar ist, erfasst wird, oder Mittel zum Erfassen der von einem Nutzer auf das Element (1) zur Interaktion mit dem Nutzer ausgeübte Last im Falle eines verschiebbaren Elements zur Interaktion mit dem Nutzer, um die Richtung der Kraft zu erkennen und um zu erkennen, ob die Kraft größer als ein gegebener Wert für eine gegebene Richtung ist, wobei die Steuereinheit das System (6) zum Erzeugen des genannten Reizes auf der Grundlage der über die Kraft erhaltenen Informationen zumindest dann steuert, wenn eine Geschwindigkeit von Null oder eine Geschwindigkeit zumindest kleiner als ein Wert, unterhalb dessen die Bewegung für den Nutzer des Elements (1) zur Interaktion mit dem Nutzer nicht wahrnehmbar ist, erfasst wird,
und dass die Steuereinheit ferner enthält:
- eine erste Datenbank, die Werte eines ersten haptischen Musters enthält, wenn die Norm der Betätigungsgeschwindigkeit kleiner oder gleich einem gegebenen ersten Wert ist und sich das Element zur Interaktion mit dem Nutzer in der ersten Richtung bewegt,
- eine zweite Datenbank, die Werte eines zweiten haptischen Musters enthält, wenn die Norm der Betätigungsgeschwindigkeit zumindest gleich einem gegebenen zweiten Wert ist und sich das Element zur Interaktion mit dem Nutzer in der ersten Richtung bewegt,
- eine dritte Datenbank, die Werte eines dritten haptischen Musters enthält, wenn die Norm der Betätigungsgeschwindigkeit kleiner oder gleich einem gegebenen dritten Wert ist und sich das Element zur Interaktion mit dem Nutzer in der zweiten Richtung bewegt,
- eine vierte Datenbank, die Werte eines vierten haptischen Musters enthält, wenn die Norm der Betätigungsgeschwindigkeit zumindest gleich einem gegebenen vierten Wert ist und sich das Element zur Interaktion mit dem Nutzer in der zweiten Richtung bewegt, und
wobei die Mittel, die zum Erzeugen der Befehle geeignet sind, je nach Betätigungsrichtung des Elements zur Interaktion mit dem Nutzer die erste und/oder die zweite Datenbank oder die dritte und/oder die vierte Datenbank verwenden, um einen Wert eines neuen haptischen Musters zu bestimmen, auf dessen Grundlage ein Befehl erzeugt wird.

3. Haptische Schnittstelle nach Anspruch 2,
wobei
die Mittel zum Erfassen des von dem Nutzer auf das Element zur Interaktion mit dem Nutzer ausgeübten Drehmoments oder der Kraft zumindest einen Lastsensor (40.1, 40.2, 240.1, 240.2), der vorzugsweise unter Vorspannung gelagert ist, oder mindestens einen Sensor für die durch das Drehmoment oder die Kraft verursachte Verformung an einem der Elemente der haptischen Schnittstelle enthalten.

4. Haptische Schnittstelle nach Anspruch 2 oder 3, enthaltend einen Testkörper (26, 126, 226), der so angeordnet ist, dass er durch das vom Nutzer auf das Element (1) zur Interaktion mit dem Nutzer ausgeübte Drehmoment oder die Kraft verformt wird, wobei die Mittel zum Erfassen des Drehmoments oder der Kraft in Kontakt mit dem Testkörper (26, 126, 226) stehen.

5. Haptische Schnittstelle nach Anspruch 4,
wobei der Testkörper (26, 126, 226) aus einem Material besteht, derart, dass dessen Verformung für den Nutzer nicht wahrnehmbar ist.

6. Haptische Schnittstelle nach einem der Ansprüche 1 bis 5,
wobei die Mittel zum Erzeugen von Befehlen eine Interpolation, beispielsweise eine lineare Interpolation, zwischen einem Wert aus der ersten Datenbank und einem Wert aus der zweiten Datenbank oder zwischen einem Wert aus der dritten Datenbank und einem Wert aus der vierten Datenbank durchführen.

7. Haptische Schnittstelle nach einem der Ansprüche 1 bis 6,
wobei die gegebene zweite Geschwindigkeit als maximale Betätigungsgeschwindigkeit in der ersten Betätigungsrichtung festgelegt ist und die gegebene vierte Geschwindigkeit als maximale Betätigungsgeschwindigkeit in der zweiten Betätigungsrichtung festgelegt ist.

8. Haptische Schnittstelle nach einem der Ansprüche 1 bis 7,
wobei das Fluid ein magneto-rheologisches Fluid ist, wobei der Reiz ein Magnetfeld ist und wobei die erzeugten Befehle Stromstärken sind.

9. Haptische Schnittstelle nach einem der Ansprüche 1 bis 8,
wobei die Mittel zum Bestimmen der Betätigungsgeschwindigkeit die Ableitungen der Informationen, die von den Mitteln zum Bestimmen der aktuellen Position geliefert werden, berechnen.

10. Haptische Schnittstelle nach einem der Ansprüche 1 bis 9,
wobei das Element (1) zur Interaktion mit dem Nutzer drehbar ist und fest mit einer Drehwelle (2) mit Längsachse (X) verbunden ist, mit der das Element (12) zur Interaktion mit dem Fluid drehfest verbunden ist, wobei die Mittel zum Messen der aktuellen Position ein Winkelpositionssensor sind.

11. Haptische Schnittstelle nach einem der Ansprüche 1 bis 10, wobei das Element (1) zur Interaktion mit dem Nutzer verschiebbar ist.

12. Verfahren zum Steuern einer haptischen Schnittstelle nach einem der Ansprüche 1 bis 11, umfassend die Schritte:
a) Bestimmen der aktuellen Position des Elements zur Interaktion mit dem Nutzer,
b) Bestimmen der Geschwindigkeit des Elements zur Interaktion mit dem Nutzer,
c) Bestimmen der Betätigungsrichtung,
d) Bestimmen eines Wertes eines haptischen Musters für die bestimmte Betätigungsgeschwindigkeit für die bestimmte Betätigungsrichtung, wobei der Wert eines haptischen Musters ausgehend von einem ersten Wert eines haptischen Musters für eine Betätigungsgeschwindigkeit bestimmt wird, der geringer als ein gegebener erster Wert und nicht Null ist, und von einem zweiten Wert eines haptischen Musters für eine Betätigungsgeschwindigkeit, der zumindest gleich einem gegebenen zweiten Wert ist,
e) Erzeugen eines Befehls an das System zum Erzeugen des Reizes.

13. Steuerungsverfahren nach Anspruch 12, wobei der Schritt d) ein Schritt des Berechnens von dem Wert eines haptischen Musters für die bestimmte Betätigungsgeschwindigkeit ist, der mittels einer Schwellenfunktion bestimmt wird, wobei der Wert des Musters für die bestimmte Betätigungsgeschwindigkeit entweder der erste Wert eines haptischen Musters für eine Betätigungsgeschwindigkeit, der geringer als ein gegebener erster Wert ist, oder der zweite Wert eines haptischen Musters für eine Betätigungsgeschwindigkeit ist, der zumindest gleich einem gegebenen zweiten Wert ist.

14. Verfahren zum Steuern einer haptischen Schnittstelle nach einem der Ansprüche 2 bis 5, umfassend die Schritte:
a) Bestimmen der aktuellen Position des Elements zur Interaktion mit dem Nutzer,
b) Bestimmen der Geschwindigkeit des Elements zur Interaktion mit dem Nutzer,
c) Bestimmen der Betätigungsrichtung,
d) Bestimmen eines Wertes eines haptischen Musters für die bestimmte Betätigungsgeschwindigkeit für die bestimmte Betätigungsrichtung,
e) Erzeugen eines Befehls an das System zum Erzeugen des Reizes,
wobei das Verfahren einen vor dem Schritt d) erfolgenden Schritt des Ermittelns einer Absicht des Nutzers, auf das Element zur Interaktion mit dem Nutzer einzuwirken, umfasst und wobei in Schritt d) der Wert eines haptischen Musters ausgehend von einem ersten Wert eines haptischen Musters für eine Betätigungsgeschwindigkeit bestimmt wird, der geringer oder gleich einem gegebenen ersten Wert ist, der gegebenenfalls Null ist, und von einem zweiten Wert eines haptischen Musters für eine Betätigungsgeschwindigkeit, der zumindest gleich einem gegebenen zweiten Wert ist.

15. Steuerungsverfahren nach einem der Ansprüche 12 bis 14, wobei der Schritt d) ein Schritt des Berechnens von dem Wert eines haptischen Musters für die bestimmte Betätigungsgeschwindigkeit durch Interpolation, beispielsweise lineare Interpolation, ist.

## Claims

1. Haptic interface comprising:
- an interaction element (1) for interacting with a user suitable for moving in a first direction and in a second direction,
- an interaction element (12) for interacting with a fluid, the viscosity whereof varies according to an external stimulus, the interaction element (12) for interacting with the fluid being secured at least in translation or at least in rotation with the interaction element (1) for interacting with the user,
- a brake comprising a fluid, the viscosity whereof varies according to an external stimulus, and a generation system (6) for generating said stimulus on command in said fluid, the interaction element (12) for interacting with the fluid being arranged in the fluid,
- means for determining a current position (14) of the interaction element (1) for interacting with the user,
- means for determining the speed of the interaction element (1) for interacting with the user,
- a control unit configured to send orders to said system for generating said stimulus, the control unit comprising means for generating said orders according to the current position of the element for interacting with the user and the current actuation speed of the element for interacting with the user,
**characterized in that** the control unit comprises at least:
- a first database containing values of a first haptic pattern when the norm of the actuation speed is less than or equal to a first given value and is not zero and the element for interacting with the user is moved in the first direction,
- a second database containing values of a second haptic pattern when the norm of the actuation speed is at least equal to a second given value and the element for interacting with the user is moved in the first direction,
- a third database containing values of a third haptic pattern when the norm of the actuation speed is less than or equal to a third given value and is not zero and the element for interacting with the user is moved in the second direction,
- a fourth database containing values of a fourth haptic pattern when the norm of the actuation speed is at least equal to a fourth given value and the element for interacting with the user is moved in the second direction, and
wherein the means suitable for generating orders use, according to the direction of actuation of the element for interacting with the user, the first and/or second databases or the third and/or fourth databases to determine a value of a new haptic pattern on the basis whereof an order is generated.

2. Haptic interface comprising:
- an interaction element (1) for interacting with a user suitable for moving in a first direction and in a second direction,
- an interaction element (12) for interacting with a fluid, the viscosity whereof varies according to an external stimulus, the interaction element (12) for interacting with the fluid being secured at least in translation or at least in rotation with the interaction element (1) for interacting with the user,
- a brake comprising a fluid, the viscosity whereof varies according to an external stimulus, and a generation system (6) for generating said stimulus on command in said fluid, the interaction element (12) for interacting with the fluid being arranged in the fluid,
- means for determining a current position (14) of the interaction element (1) for interacting with the user,
- means for determining the speed of the interaction element (1) for interacting with the user,
- a control unit configured to send orders to said system for generating said stimulus, the control unit comprising means for generating said orders according to the current position of the element for interacting with the user and the current actuation speed of the element for interacting with the user,
**characterized in that** the haptic interface also comprises
- means for determining the user's intended action on the element for interacting with the user, comprising means for detecting the torque applied by the user to the interaction element (1) for interacting with the user, in the case of a rotatable element for interacting with the user, in order to determine the direction of the torque and whether the torque is greater than a given value for a given direction, the control unit controlling the generation system (6) for generating said stimulus on the basis of the information obtained on the torque at least when a zero speed or a speed at least less than a value below which the movement is imperceptible for the user, of the interaction element (1) for interacting with the user is detected, or means for detecting the load applied by a user to the interaction element (1) for interacting with the user, in the case of a translatable element for interacting with the user, in order to determine the direction of the force and whether the force is greater than a given value for a given direction, the control unit controlling the generation system (6) for generating said stimulus on the basis of the information obtained on the force at least when a zero speed or a speed at least less than a value below which the movement is imperceptible for the user, of the interaction element for interacting with the user (1) is detected,
and **in that** the control unit comprises at least:
- a first database containing values of a first haptic pattern when the norm of the actuation speed is less than or equal to a first given value and the element for interacting with the user is moved in the first direction,
- a second database containing values of a second haptic pattern when the norm of the actuation speed is at least equal to a second given value and the element for interacting with the user is moved in the first direction,
- a third database containing values of a third haptic pattern when the norm of the actuation speed is less than or equal to a third given value and the element for interacting with the user is moved in the second direction,
- a fourth database containing values of a fourth haptic pattern when the norm of the actuation speed is at least equal to a fourth given value and the element for interacting with the user is moved in the second direction, and
wherein the means suitable for generating orders use, according to the direction of actuation of the element for interacting with the user, the first and/or second databases or the third and/or fourth databases to determine a value of a new haptic pattern on the basis whereof an order is generated.

3. Haptic interface according to claim 2, wherein the means for detecting the torque or force applied by the user to the element for interacting with the user comprise at least one load sensor (40.1, 40.2, 240.1, 240.2), preferentially mounted pre-stressed, or at least one sensor of the strain induced by the torque or force to one of the elements of the haptic interface.

4. Haptic interface according to claim 2 or 3, comprising a proof body (26, 126, 226) which is arranged so as to be strained by the torque or force applied by the user to the interaction element (1) for interacting with the user, the means for detecting the torque or force being in contact with said proof body (26, 126, 226).

5. Haptic interface according to claim 4, wherein the proof body (26, 126, 226) is made of a material such that the strain thereof is not perceptible by the user.

6. Haptic interface according to any one of claims 1 to 5, wherein the means generating the orders apply an interpolation, for example a linear interpolation, between a value of the first database and a value of the second database or between a value of the third database and a value of the fourth database.

7. Haptic interface according to any one of claims 1 to 6, wherein the second given speed is defined as being the maximum actuation speed in the first actuation direction and the fourth given speed is defined as being the maximum actuation speed in the second actuation direction.

8. Haptic interface according to any one of claims 1 to 7, wherein the fluid is a magnetorheological fluid, the stimulus being a magnetic field and wherein the orders generated are current intensities.

9. Haptic interface according to any one of claims 1 to 8, wherein the means for determining the actuation speed compute the derivatives of the information provided by the means for determining the current position.

10. Haptic interface according to any one claims 1 to 9, wherein the interaction element (1) for interacting with the user is rotatable and is secured to a rotary shaft (2) the longitudinal axis (X) whereof the interaction element (12) for interacting with the fluid is secured in rotation, the means for measuring the angular position between an angular position sensor.

11. Haptic interface according to any one of claims 1 to 10, wherein the interaction element (1) for interacting with the user is translatable.

12. Method for controlling a haptic interface according to any one of claims 1 to 11, comprising the following steps:
a) determining the current position of the element for interacting with the user,
b) determining the speed of the element for interacting with the user,
c) determining the direction of actuation,
d) determining, for the direction of actuation determined, a value of a haptic pattern for the actuation speed determined, the value of a haptic pattern being determined on the basis of a first value of a haptic pattern for an actuation speed less than a first given value and not equal to zero and a second value of a haptic pattern for an actuation speed at least equal to a second given value.
e) generating an order to the system for generating said stimulus.

13. Control method according to claim 12, wherein step d) is a step for computing said value of a haptic pattern for the actuation speed determined by means of a threshold function, the value of the pattern for the actuation speed determined being either the first value of a haptic pattern for an actuation speed less than a first given value, or the second value of a haptic pattern for an actuation speed at least equal to the second given value.

14. Method for controlling a haptic interface according to any one of claims 2 to 5, comprising the following steps:
a) determining the current position of the element for interacting with the user,
b) determining the speed of the element for interacting with the user,
c) determining the direction of actuation,
d) determining, for the direction of actuation determined, a value of a haptic pattern for the actuation speed determined,
e) generating an order to the system for generating said stimulus, said method comprising a step prior to step d) for determining a user's intended action on the element for interacting with the user, and wherein during step d), the value of a haptic pattern is determined on the basis of a first value of a haptic pattern for an actuation speed less than or equal to a first given value optionally equal to zero and a second value of a haptic pattern for an actuation speed at least equal to a second given value.

15. Control method according to any one of claims 12 to 14, wherein step d) is a step for computing said value of a haptic pattern for the actuation speed determined by interpolation, for example by linear interpolation.
